# EUROPEAN PATENT APPLICATION

(11) **EP 2 782 420 A1**
(43) Date of publication of application: **24.09.2014**
(21) Application number: 13181055.8
(22) Date of filing: 20.08.2013
(51) Int. Cl.: H05B 33/08, H05B 37/03

(54) **Series load control apparatus and marker light apparatus**

(30) Priority: 18.03.2013 JP 2013055065
(71) Applicant: Toshiba Lighting & Technology Corporation, Yokosuka-shi Kanagawa 237-8510 (JP)
(72) Inventor: Niino, Shingo, Kanagawa 237-8510 (JP); Matsuno, Masaru, Kanagawa 237-8510 (JP)
(74) Representative: Bokinge, Ole

(57) **Abstract**

According to one embodiment, a plurality of first saturable units respectively include input sections connected to an output side of a constant current power supply apparatus in series to one another and respectively supply outputs to loads corresponding thereto. A second saturable unit includes an input section and an output section, the input section being connected to the input sections of the first saturable units in series. An abnormality detecting unit monitors a state of the load of at least one of the first saturable units, closes the output section of the second saturable unit during normal time, and opens the output section of the second saturable unit during abnormal time.

## Description

### FIELD

Embodiments described herein generally relate to a series load control apparatus that urges a plurality of loads provided in a constant current power supply apparatus in series to one another and relate to a marker light apparatus.

### BACKGROUND

For example, on a runway, a taxiway, or the like in the airport, a plurality of marker lights of an embedded type or a ground type are connected in series and supplied with electric power form a constant current power supply apparatus to be lit. The marker lights need to change an optical output according to the ambient environment. Therefore, the marker lights can be dimmed and lit by changing an output current value of the constant current power supply apparatus.

In the marker lights, electric power is supplied to bulbs, which function as light sources, from the constant current power supply apparatus via saturable means such as isolation transformers of a saturable type. When the saturable means is the isolation transformers of the saturable type, input winding wires of the isolation transformers are connected to an output side of the constant current power supply apparatus in series to one another. Consequently, when the light source of any one of the plurality of marker lights burns out, a voltage having constant current and open-circuit impedance is generated on an output side of the saturable means corresponding to the marker light. Therefore, the saturable means is saturated at every half cycle of an alternating-current voltage and electric power can be supplied to the other marker lights.

In such a marker light system, when the light source of any one of the marker lights burns out, an output of the constant current power supply apparatus changes in a process in which the saturable means corresponding to the marker light reaches saturation or during saturation of the saturable means. For example, a change in an output such as an increase in an output voltage value of the constant current power supply apparatus due to a change in a load impedance value involved in the burn-out of the light source, distortion of an output voltage or current waveform of the constant current power supply apparatus involved in an increase in equivalent inductance, or a change in a voltage or current phase difference occurs. Therefore, the burn-out of the light source is detected by detecting the change in the output.

On the other hand, recently, a solid-state light-emitting element such as a light-emitting diode (LED) starts to be used as the light source of the marker light instead of a bulb from a viewpoint of long life, low power consumption, and the like. When the solid-state light-emitting element is used as the light source, as lighting control means, for example, rectifying means, voltage stabilizing means, and current adjusting or voltage adjusting means for controlling a conduction current or an applied voltage of the solid-state light-emitting element to obtain a required light amount are required. In this case, unlike the case in which the bulb is used as the light source, besides open circuit of the light source (the solid-state light-emitting element), short circuit of the light source (the solid-state light-emitting element) and a failure of the lighting control means could occur.

However, when the light source is the solid-state light-emitting element, even if open circuit or short circuit of the light source, a failure of the lighting control means, or the like occurs, the output side of the saturable means less easily changes to an open-circuit state unlike the case of the bulb. This is because, since the lighting control means is present, for example, even if an open-circuit failure occurs in the solid-state light-emitting element, the output side of the saturable means does not immediately changes to the open-circuit state. In particular, when the lighting control means includes voltage stabilizing means, it is difficult to saturate the saturable means. When a short-circuit failure occurs in the solid-state light-emitting element, the storable means is less easily saturated because of the same reason. When a part of the lighting control means fails, the saturable means does not reach saturation depending on a place of the failure. When the saturable means does not reach saturation, since this means a state close to a state during a normal load, electric power can be supplied to the other marker lights.

As explained above, when the saturable means is less easily saturated, it is difficult to cause a change in an output of the constant current power supply apparatus and detect burn-out.

Therefore, when an abnormality of the lighting control means, the solid-state light-emitting element, or the like occurs, the output side of the isolation transformer functioning as the saturable means is forcibly opened. Consequently, it is possible to actively saturate the saturable means, change an output of the constant current power supply apparatus, and improve detection accuracy of a load abnormality.

However, since the output side of the isolation transformer is forcibly opened, a power supply for the lighting control means, the solid-state light-emitting element, and the like cannot be secured after the opening. Therefore, there is an inconvenience that, when the output side of the isolation transformer is opened once because of a malfunction of detecting means for detecting an abnormality, determining means for determining presence or absence of an abnormality, or the like or other reasons, the light source remains unlit and the marker light cannot play a function thereof. Work for artificial restoration including specification of the marker light is difficult. Moreover, it is useless to perform the work every time a malfunction occurs. Therefore, it is desirable that the marker light can be automatically restored. However, a substantial increase in cost is caused if special automatic restoring means such as remote control is provided.

### BRIEF DESCRIPTION OF THE DRAWINGS

FIG. 1 is a circuit diagram of a series load control apparatus and a marker light apparatus according to a first embodiment;
FIGS. 2(a) to 2(d) are waveform charts for explaining the action of the series load control apparatus; and
FIG. 3 is a circuit diagram of a series load control apparatus and a marker light apparatus according to a second embodiment.

### DETAILED DESCRIPTION

In general, according to one embodiment, there is provided a series load control apparatus including a constant current power supply apparatus, a plurality of first saturable units, at least one second saturable unit, and at least one abnormality detecting unit. The first saturable units respectively include input sections connected to an output side of the constant current power supply apparatus in series to one another and respectively supply outputs to loads corresponding thereto. The second saturable unit includes an input section and an output section, the input section being connected to the input sections of the first saturable units in series. The abnormality detecting unit monitors a state of the load of at least one of the first saturable units, closes the output section of the second saturable unit during normal time, and opens the output section of the second saturable unit during abnormal time.

Since the second saturable unit is saturated during an abnormality of the load, it is possible to cause an output change of the constant current power supply apparatus and improve abnormality detection accuracy of the load. It is possible to perform load control, monitoring, and the like after abnormality detection without stopping an output of the first saturable unit that supplies electric power to the load. Even when the abnormality detecting unit or the like malfunctions, it is possible to continuously urge the load.

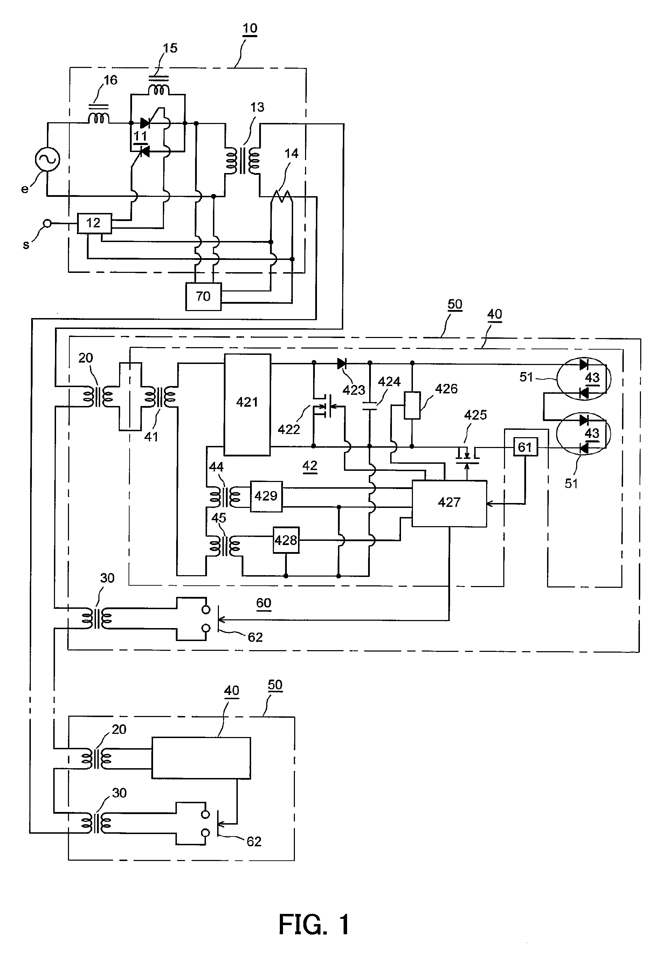

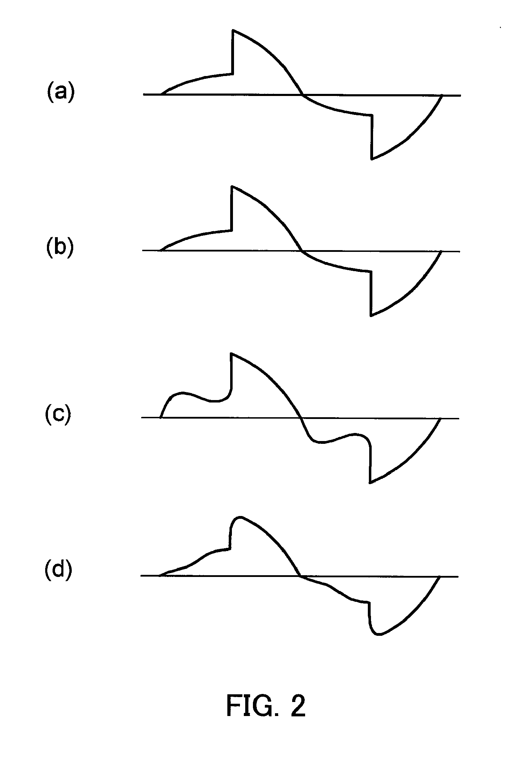

A first embodiment is explained below with reference to FIGS. 1 and 2. FIG. 1 is a circuit diagram of a series load control apparatus and a marker light apparatus. FIGS. 2(a) to 2(d) are waveform charts for explaining the action of the series load control apparatus.

Reference numeral 10 denotes a constant current power supply apparatus. Input sections (first input sections) of a plurality of first saturable units 20 are connected to an output side of the constant current power supply apparatus 10 in series. Input sections (second input sections) of second saturable units 30 are connected in series to correspond to each of the input sections of the first saturable units 20. In this embodiment, the second saturable units 30 have a larger capacity than the first saturable units 20. The saturable units 20 and 30 are, for example, transformers of an isolation type. However, the saturable units 20 and 30 may be, for example, transformers of a non-isolation type or semiconductor devices configured to be applied with a voltage equal to or larger than a predetermined voltage value to conduct. In this embodiment, a unit that conducts in a low impedance state (substantially including zero) by being applied with a voltage value equal to or larger than a predetermined value is defined as a saturable unit.

The constant current power supply apparatus 10 in this embodiment is, for example, a phase control type and includes a pair of thyristors connected in parallel to each other in opposite polarities. The constant current power supply apparatus 10 mainly includes a phase control device 11 configured to subject an output voltage of a sine wave alternating-current power supply "e" having a commercial frequency to phase control and a conduction phase control device 12 configured to control a conduction phase of the phase control device 11. For example, dimming command signals S in five stages are input to the conduction phase control device 12.

The constant current power supply apparatus 10 includes an output transformer 13, a current detecting device 14 for current feedback control and the like, an inductor 15 configured to feed a small current bypassing the phase control device 11, and an inductor 16 provided in series to the phase control device 11 and configured to relax current build-up during conduction of the phase control device 11.

However, the constant current power supply apparatus 10 is not limited to the phase control type and may be other type. For example, the constant current power supply apparatus 10 may be a type for outputting a sine wave having a low frequency equivalent to a commercial frequency using an inverter or the like. In this case, a switching unit of the inverter only has to be controlled to attain a constant current.

Electric power can be supplied from an output section (a first output section) of the first saturable unit 20 to a load 40. The load 40 in this embodiment configures a part of a marker light apparatus 50 and includes a current transformer 41 to which an output of the first saturable unit 20 is supplied. An output of the current transformer 41 is input to a lighting control unit 42. Light sources 43, 43 are subjected to lighting control with an output of the lighting control unit 42. The light sources 43, 43 include solid-state light-emitting elements such as LEDs, organic ELs, or semiconductor lasers and are connected in series to each other. The light sources 43, 43 are housed in lamp bodies 51, 51 functioning as cases of the marker light apparatus 50.

The load 40 includes a second current transformer 44 and a third current transformer 45 provided in series to the current transformer 41.

The lighting control unit 42 includes a rectifying device 421 to which an output of the current transformer 41 is input and a switching unit 422 provided on an output side of the rectifying device 421 and configured to control an output. A smoothing capacitor 424 is provided on an output side of the switching means 422 via a diode 423 for reverse current prevention.

The lighting control unit 42 is configured to be capable of changing supplied power to the light sources 43, 43. In this embodiment, the lighting control unit 42 includes, for example, a field effect transistor, which is a switching unit 425, connected in series to the light sources 43, 43 between both ends of the smoothing capacitor 424.

Further, the lighting control unit 42 includes a voltage stabilizing unit for converting an output of the smoothing capacitor 424 into a constant voltage. The voltage stabilizing unit mainly includes the switching unit 422 and a voltage detecting device 426 configured to detect a voltage across the smoothing capacitor 424.

Conduction of the switching device 422 is controlled by a control device 427 explained below according to a detection result of the voltage detecting device 426 to convert an output voltage of the smoothing capacitor 424 into a constant voltage.

As a marker light apparatus, the marker light apparatus 50 including the light sources 43, 43 including solid-state light-emitting elements in this embodiment and a marker light apparatus (not shown in the figure) including the conventional bulb as a light source are sometimes urged from the common constant current power supply apparatus 10. In this case, the constant current power supply apparatus 10 outputs a relatively large current set in five stages between 6.6 A and 2.8 A for the bulb. On the other hand, a required current of the light sources 43, 43 may be about several ten mA to several hundred mA at most. Therefore, it is suitable to reduce an electric current by a difference between the electric currents. This function may be played by the switching unit 422. That is, an electric current equivalent to the difference only has to be bypassed via the switching unit 422. However, this current reducing function may be other means for, for example, providing a switching tap on an output side of the current transformer 41 and switching the switching tap according to the output current value 6.6 A to 2.8 A from the constant current power supply apparatus 10.

The control device 427 controls the switching unit 425 according to an output current (any one of the five stages between 6.6 A and 2.8 A) of the constant current power supply apparatus 10. In this embodiment, the switching unit 425 is subjected to pulse width control (PWM).

An output current signal for detecting an output current of the constant current power supply apparatus 10 can be obtained from a root mean square value, an average value, a conduction phase, or the like according to a type, an output waveform, and the like of the constant current power supply apparatus 10. In short, an output level indicated by the output current of the constant current power supply apparatus 10 is detected. A current detecting unit 428 configured to detect the output current signal of the constant current power supply apparatus 10 is provided on an output side of the third current transformer 45 in FIG. 1. The output current signal of the current detecting unit 428 is input to the control device 427.

The control device 427 controls, in order to play the current reducing function, the switching unit 422 according to the output current signal input thereto and subjects the switching unit 425 to PWM control (a high-frequency ON/OFF operation period in one cycle of PWM/one cycle of PWM) in order to change optical outputs of the light sources 43, 43 to optical outputs corresponding to the output current signal. For example, the control device 427 controls, in one cycle (T) of a PWM signal (e.g., between several hundred Hz and several ten kHz), a time ratio of a high-frequency ON/OFF operation period (t) for outputting a signal for turning on and off the switching units 422 and 425 at a high frequency (e.g., between several hundred Hz and several ten MHz). Consequently, the control device 427 controls a charging amount of the smoothing capacitor 424 and changes a supply power amount to the light sources 43, 43 to change the optical outputs.

The control device 427 is suitably configured by mainly a microcomputer or an IC in terms of a reduction in size and weight. When the control device 427 is configured by mainly the microcomputer, it is easy to store or calculate conversion data in order to match a supply current amount-optical output characteristic of the light sources 43, 43 to a supply current amount-optical output characteristic of the bulb. However, naturally, the control device 427 is not limited to the above.

Further, as the lighting control unit 42 in this embodiment, a feedback control unit may be added. For example, the lighting control unit 42 may detect an electric current flowing to the light sources 43, 43 and change the high-frequency ON/OFF operation period (t) of the switching unit 425 or a frequency or on-duty of high-frequency ON/OFF such that the electric current is a predetermined electric current when compared with a reference value corresponding to a dimming degree. Consequently, it is possible to control the electric current actually flowing to the light sources 43, 43 to be an electric current corresponding to the dimming degree and accurately fix the optical output.

A power supply unit 429 including a rectifier and a voltage stabilizing circuit is provided on an output side of the second current transformer 44 to supply electric power to required means such as the control device 427.

An abnormality detecting unit 60 monitors a state of at least any one of the lighting control unit 42, the light sources 43, 43, and the lamp bodies 51, 51, closes an output section (a second output section) of the second saturable units 30 during normal time, and opens the output section of the second saturable unit 30 during abnormal time. In this embodiment, the abnormality detecting unit 60 includes a detecting unit 61 configured to detect an electric current flowing to the light sources 43, 43, the control device 427 configured to receive a detection signal of the detecting unit 61 and determine whether a detection signal is within a predetermined range, and an opening and closing unit 62 configured to control the output section of the second saturable unit 30 to open or close according to a determination result of the control device 427. Other components and units can be provided in series to the opening and closing units 62. The components and the units only have to be selected taking into account a relation between power consumption and necessity during normal time.

The detecting unit 61 may be a detecting unit configured to detect, besides the above, other signals of a voltage across the light sources 43, 43 and an optical output of the light sources 43, 43, an output current and a voltage of the lighting control unit 42, temperatures of the lighting control unit 42 and the light sources 43, 43, air tightness of the lamp bodies 51, 51, presence or absence of water intrusion, presence or absence of dew condensation, presence or absence of breakage, and the like or may be a detecting unit configured to detect signals of a plurality of places. In short, the detecting unit 61 only has to be capable of detecting an abnormality on a load side from the lighting control unit 42 and the first saturable unit 20. For detection of an abnormal state, a sensor or the like corresponding to a detection target only has to be used. The detecting unit 61 can be configured as appropriate by those skilled in the art.

As a unit configured to determine whether a detection signal is within the predetermined range, an operational amplifier, a comparator, and other electronic components such as a semiconductor switch may be combined. As the opening and closing unit 62, a relay, a semiconductor switch unit, or the like can be adopted as appropriate.

The series load control apparatus shown in FIG. 1 configures a marker light system in the airport or the like. The marker light apparatus 50 includes the saturable units 20 and 30, the load 40, and the abnormality detecting unit 60. In the marker light apparatus 50 shown in FIG. 1, as an example, the light sources 43, 43 are respectively housed in the separate lamp bodies 51, 51 and the saturable units 20 and 30, the load 40, and the abnormality detecting unit 60 are housed in a common separate case (not shown in the figure). For example, the marker light apparatus 50 including the light sources 43 and the lamp bodies 51 is embedded in a taxiway, a runway, or the like. The separate case in which the other units are housed is set in a handhole or the like.

In the marker light apparatus 50, one or three or more light sources 43 and lamp bodies 51 may be provided for the first saturable unit 20 instead of the two light sources 43 and the two lamp bodies 51.

When the abnormality detecting unit 60 detects an abnormal state, the output section of the second saturable unit 30 is opened. Therefore, the second saturable unit 30 repeats states of non-saturation and saturation at every half cycle of an alternating-current voltage. Consequently, an output changes from an output during normal time, for example, distortion occurs in an output waveform of the constant current power supply apparatus 10. An abnormality detecting device 70 set in a control room or the like detects this output change, whereby abnormal detection for the marker light apparatus 50 is performed.

The abnormality detecting device 70 in this embodiment is configured to receive a voltage on an output side of the phase control device 11 and a detection signal of the current detecting device 14 and perform abnormality detection. An analyzing unit, a comparing unit, and the like for abnormality determination may be any unit.

Action of this embodiment is explained.

The constant current power supply apparatus 10 is set to output an electric current for obtaining a desired optical output of, for example, 100%, i.e., output an electric current of 6.6 A in this embodiment. This constant current of 6.6 A is supplied to each of the marker light apparatuses 50 via the first saturable unit 20.

In each of the marker light apparatuses 50, a direct-current voltage output from the rectifying device 421 is controlled by the switching unit 422, applied to the smoothing capacitor 424, and converted into a predetermined direct-current voltage. The voltage is fixed to a predetermined voltage value by a voltage fixing unit including the switching unit 422, the voltage detecting device 426, and the control device 427. This direct current is supplied to the light sources 43, 43 via the switching unit 425.

On the other hand, an output current signal of the constant current power supply apparatus 10 is input to the control device 427 from the current detecting unit 428. Since the 100% electric current of 6.6 A is output at present, the control device 427 subjects the ON/OFF operation period of the switching unit 425 to PWM control and supplies, for example, an electric current of 350 mA to the light sources 43, 43 in terms of a root mean square value. Consequently, the light sources 43, 43 are lit at brightness of 100%.

If the lighting control unit 42, the light sources 43, 43 and the like are normal, the control device 427 of the abnormality detecting unit 60 closes the opening and closing unit 62. Therefore, the second saturable unit 30 is not opened on the output side and a constant current flows. Therefore, a change such as waveform distortion is not caused in an output of the constant current power supply apparatus 10.

A voltage waveform on the output side of the phase control device 11 input to the abnormality detecting device 70 is as shown in FIG. 2(a). A current waveform input from the current detecting device 14 is as shown in FIG. 2(b).

On the other hand, when the lighting control unit 42, the light sources 43, 43, or the like is abnormal, for example, any one of the solid-state light-emitting elements is open-circuited, a current detection signal of the detecting unit 61 is smaller than the predetermined range. Therefore, the control device 427 opens the opening and closing unit 62 and opens the output side of the second saturable unit 30.

Therefore, the second saturable unit 30 corresponding to the marker light apparatus 50 in which an abnormality occurs is un-saturated up to a certain degree of a voltage value at each half cycle of the constant current power supply apparatus 10. However, when the voltage value rises and reaches a saturation voltage, the second saturable unit 30 suddenly conducts. A high voltage occurs or a waveform distortion like a transient phenomenon occurs in an output waveform of the constant current power supply apparatus 10 during the un-saturation and/or during the conduction.

For example, a voltage waveform on the output side of the phase control device 11 input to the abnormality detecting device 70 is as shown in FIG. 2(c) and a current waveform input from the current detecting device 14 is as shown in FIG. 2(d). The waveforms shown in FIGS. 2(c) and 2(d) are different from the waveforms shown in FIGS. 2(a) and 2(b). Therefore, the abnormality detecting device 70 can detect an abnormality of the marker light apparatus 50 by detecting this output change.

In this embodiment, the capacity of the second saturable unit 30 is set larger than the capacity of the first saturable unit 20. Therefore, it is possible to relatively increase a ratio of an output change of the constant current power supply apparatus 10 involved in saturation and improve certainty of abnormal detection. This is effective when the capacity of the first saturable unit 20 is reduced by using solid-state light-emitting elements as the light sources 43, 43.

Note that, after the saturation of the second saturable unit 30, it is possible to supply a predetermined constant current to the other first saturable units 20 and the other second saturable units 30 in the same manner as during normal time. That is, the power supply to the other load 40 and the other marker light apparatuses 50 can be continued as explained above.

It is assumed that the abnormality detecting unit 60 malfunctions because of the influence of vibration due to, for example, a shock from the outside, external noise superimposed on electric power, radio wave noise, or the like. For example, it is assumed that, due to external noise, the control device 427 of the abnormality detecting unit 60 opens the opening and closing unit 62 and opens the output section of the second saturable unit 30. In this case, the second saturable unit 30 repeats the un-saturated state and the saturated state at every half cycle of the alternating-current voltage as explained above. However, the first saturable unit 20 is not saturated. Electric power is supplied to the load 40 and the marker light apparatus 50 in the same manner as during normal time.

Therefore, the lighting control unit 42 controls lighting of the light sources 43, 43 according to an output current signal from the constant current power supply apparatus 10. Therefore, the function of the marker light apparatus 50 can be continued.

On the other hand, the abnormality detecting device 70 detects a change in an output of the constant current power supply apparatus 10 involved in the saturation of the second saturable unit 30 and detects an abnormality.

However, for example, if the malfunction of the abnormality detecting unit 60 is solved through extinction of the external noise, the output section of the second saturable unit 30 is closed again. Therefore, it is possible to solve the change in the output of the constant current power supply apparatus 10 involved in the saturation of the second saturable unit 30.

Even if the malfunction of the abnormality detecting unit 60 cannot be solved through the extinction of the noise, it is likely that the malfunction is solved by interrupting the constant current power supply apparatus 10 once and supplying electric power to the constant current power supply apparatus 10 again.

The malfunction can be solved when electric power is continuously supplied to the load 40 (or can be supplied to the load 40 again). If the power supply to the load 40 is stopped, it is difficult to solve the malfunction.

Note that, during a true abnormality such as an open circuit of the light sources 43, 43, an abnormality detecting operation involved in un-saturation and saturation of the second saturable unit 30 is continued until the load 40 or the marker light apparatus 50 in failure is restored.

With the series load control apparatus, since the second saturable unit 30 is saturated during an abnormality of the load 40, it is possible to cause an output change of the constant current power supply apparatus 10 and improve abnormality detection accuracy for the load 40. An output of the first saturable unit 20 for performing power supply to the load 40 is not stopped. Load control, monitoring, and the like after abnormality detection are possible. When the abnormality detecting unit 60 or the like malfunctions, it is possible to continuously urge the load 40.

Further, with the marker light apparatus 50, the second saturable unit 30 is saturated during an abnormality of the lighting control unit 42, the light sources 43, 43, the lamp bodies 51, 51, and the like. Therefore, it is possible to cause an output change of the constant current power supply apparatus 10 and improve abnormality detection accuracy for the lighting control unit 42, the light sources 43, 43, the lamp bodies 51, 51, and the like. When the abnormality detecting unit 60 malfunctions, it is possible to continuously light the light sources 43, 43 and continuous play the function of the marker light apparatus 50.

A plurality of the second saturable units 30 may be provided to correspond to the first saturable units 20 in a one to one relation. One or a plurality of the second saturable units 30 may be provided to correspond to one or more of the plurality of first saturable units 20.

The series load control apparatus is suitable as a marker light system in the airport. However, the series load control apparatus is not limited to this and can be applied to any system that urges the loads 40 provided in series.

In the marker light apparatus, the first saturable unit 20, the light sources 43, 43, the lighting control unit 42, the second saturable unit 30, and the abnormality detecting unit 60 are integrally provided in the common lamp bodies 51, 51. The light sources 43, 43 may be provided in the lamp bodies 51, 51 and the other units are provided separately from the lamp bodies 51, 51. Further, the first saturable unit 20, the light sources 43, 43, the lighting control unit 42, the second saturable unit 30, and the abnormality detecting unit 60 may be provided separately in two or more places in other combinations or individually.

Series connection or parallel connection includes both series (or parallel) connection via other components and series (or parallel) connection not via other components.

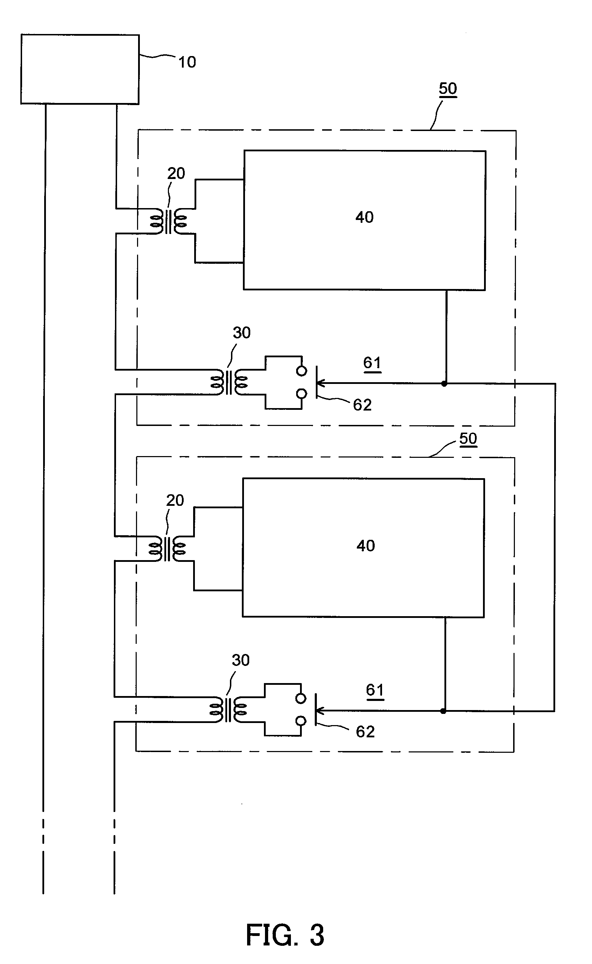

A second embodiment is explained with reference to FIG. 3.

Components same as or corresponding to the components in the first embodiment shown in FIG. 1 are denoted by the same reference numerals and explanation of the components is omitted.

In FIG. 3, when the abnormality detecting unit 60 of the marker light apparatus 50 detects an abnormal state, the abnormality detecting unit 60 opens the opening and closing unit 62 of the abnormality detecting unit 60 and opens the opening and closing unit 62 of the marker light apparatus 50 adjacent to or near the marker light apparatus 50. That is, the detecting units 61, 61 of the marker light apparatuses 50, 50 shown in FIG. 3 associate the opening and closing units 62, 62 of the marker light apparatuses 50, 50 adjacent to one another such that the detecting units 61 can control opening and closing of the opening and closing units 62, 62.

FIG. 3 shows two marker light apparatuses 50, 50. In the other marker light apparatuses 50, 50 not shown in the figure, a set of two marker light apparatuses 50, 50 are associated as explained above. A set of three or more marker light apparatuses 50 may be associated.

According to this embodiment, it is possible to saturate two or more second saturable units 30 during an abnormality of one marker light apparatus 50. Therefore, a change degree of an output of the constant current power supply apparatus 10 can be set larger than a change degree of an output of the constant current power supply apparatus 10 in the case of one second saturable unit 30. Consequently, it is possible to improve accuracy of abnormality detection. Alternatively, it is possible to reduce the capacity per one second saturable unit 30.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A series load control apparatus comprising:
a constant current power supply apparatus (10);
a plurality of first saturable units (20) respectively including input sections connected to an output side of the constant current power supply apparatus (10) in series to one another and configured to respectively supply outputs to loads (40) corresponding thereto;
at least one second saturable unit (30) including an input section and an output section, the input section being connected to the input sections of the first saturable units (20) in series; and
at least one abnormality detecting unit (60) configured to monitor a state of the load of at least one of the first saturable units (20), close the output section of the second saturable unit (30) during normal time, and open the output section of the second saturable unit (30) during abnormal time.

2. The apparatus according to claim 1, further comprising a case (51) configured to house at least a part of the loads (40), wherein
the abnormality detecting unit (60) monitors a state of the case (51), closes the output section of the second saturable unit (30) during normal time, and opens the output section of the second saturable unit (30) during abnormal time.

3. The apparatus according to claim 1, wherein
the load (40) includes a light source (43) including a solid-state light-emitting element, a lamp body (51) configured to house at least the light source (43), and a lighting control unit (42) configured to receive an output of the first saturable unit (20) and control lighting of the light source (43), and
the abnormality detecting unit (60) monitors a state of at least one of the light source (43), the lamp body (51), and the lighting control unit (42), closes the output section of the second saturable unit (30) during normal time, and opens the output section of the second saturable unit (30) timewhen an abnormal state is detected.

## Amended claims

### Amended claims in accordance with Rule 137(2) EPC.

**1.** A series load control apparatus comprising:
a constant current power supply apparatus (10); and
a marker light apparatus (50), the marker light apparatus (50) including a first saturable unit (20) including input sections connected to an output side of the constant current power supply apparatus (10) in series, configured to conduct in a low impedance state by being applied with a voltage value equal to or larger than a predetermined value, and configured to supply outputs to loads (40);
**characterized in that**
the marker light apparatus (50) includes:
a second saturable unit (30) including an input section and an output section, the input section being connected to the input sections of the first saturable unit (20) in series and configured to conduct in a low impedance state by being applied with a voltage value equal to or larger than a predetermined value; and
an abnormality detecting unit (60) configured to monitor whether a state of the load (40) of the first saturable unit (20) is normal or abnormal, close the output section of the second saturable unit (30) during the time when the state of the load is normal, and open the output section of the second saturable unit (30) during the time when the state of the load is abnormal.

**2.** The apparatus according to claim 1, further comprising a lamp body (51) configured to house at least a part of the loads (40), wherein
the abnormality detecting unit (60) monitors a state of the lamp body (51), including air tightness of the lamp body (51), presence or absence of water intrusion, presence or absence of dew condensation, and presence or absence of breakage, closes the output section of the second saturable unit (30) during normal time, and opens the output section of the second saturable unit (30) during abnormal time.

**3.** The apparatus according to claim 1, wherein
the load (40) includes a light source (43) including a solid-state light-emitting element, a lamp body (51) configured to house at least the light source (43), and a lighting control unit (42) configured to receive an output of the first saturable unit (20) and control lighting of the light source (43), and
the abnormality detecting unit (60) monitors at least one of the state of the light source (43), the state of the lamp body (51) including air tightness of the lamp body (51), presence or absence of water intrusion, presence or absence of dew condensation, and presence or absence of breakage, and the state of the lighting control unit (42), closes the output section of the second saturable unit (30) during normal time, and opens the output section of the second saturable unit (30) when an abnormal state is detected.
